# EUROPEAN PATENT APPLICATION

(11) **EP 4 350 594 A1**
(43) Date of publication of application: **10.04.2024**
(21) Application number: 22382948.2
(22) Date of filing: 07.10.2022
(51) Int. Cl.: G06Q 10/107, G06Q 30/02, H04L 12/18, H04L 67/1036

(54) **METHOD FOR OPERATING A DISTRIBUTION SERVER SYSTEM**

(71) Applicant: Giesecke+Devrient Mobile Security Germany GmbH, 81677 München (DE)
(72) Inventor: Sanchez, Alejandro, 08820 El Prat de Llobregat (Barcelona) (ES); Dans, Martin, 08820 El Prat de Llobregat (Barcelona) (ES); Garcia, Luis Domingo, 08820 El Prat de Llobregat (Barcelona) (ES); Gallego, Ixent, 08820 El Prat de Llobregat (Barcelona) (ES); Joshi, Mukesh, 08820 El Prat de Llobregat (Barcelona) (ES); Arbós, Noemí, 08820 El Prat de Llobregat (Barcelona) (ES); Gaur, Mudit, 100 74 Stockholm (SE)
(74) Representative: Giesecke+Devrient IP

(57) **Abstract**

The present invention is directed towards a computer-implemented method for operating a distribution server system which allows the reduction of traffic load and especially spam is avoided. Moreover, the present invention is directed towards the distribution server system as such, along with a computer program product comprising instructions for implementing the suggested method and operating the suggested distribution server system.

## Description

The present invention is directed towards a computer-implemented method for operating a distribution server system which allows the reduction of traffic load and especially spam is avoided. Moreover, the present invention is directed towards the distribution server system as such, along with a computer program product comprising instructions for implementing the suggested method and operating the suggested distribution server system.

WO 2004/046 990 A1 teaches a method involving data exchange comprising a step of receiving for a specific time period having a particular starting date and ending date data from several users.

US 2004 0054574 A1 teaches a system for electronic distribution of dated promotions involving a plurality of consumer computers each operated by a consumer and having a web browser for establishing connectivity with a remote server.

WO 2007/131 172 A1 teaches a device providing an offer, via an interface at a vending machine.

Nowadays the opt-out lists are static and, consequently, adding a person or removing a person requires manual input. This person will remain in the list until someone manually removes him or her. So, if a person is in the list, he or she will not receive any marketing campaign. In order to manage some country laws that allow sending a specific number of marketing campaign per SMS to each person currently also manually, someone creates a list of destination users for each campaign to be sent during e.g. this week or daily, depending on the relevant users, e.g. customers. This means that the responsible person manually checks if the same number is included or not in more lists than the allowed number of campaigns per week.

Consequently, there is a problem that a lot of time is spent creating destination lists and human error might occur. Moreover, opt-outs lists cannot be used for this purpose as they are static and consequently managed manually by a customer-care person.

According to the prior art, information is provided via computer networks and, consequently, huge amounts of data are exchanged over such networks. Hence, huge amounts of traffic arise and respective server systems need to handle the workload. This results in huge effort and moreover, there is a problem that such users might receive information which was already provided or receive an excessive amount of information.

Summarizing these issues, commonly known methods for operating a distribution server system result in large effort from a technical perspective and moreover, the traffic increases due to heavy advertisement activities.

Next to the technical problems as indicated above, specific countries prohibit excessive information provision by law. Consequently, not only a problem of heavy workload arises but human error might lead to illegal distribution of messages over a network. Hence, there is a need for the provision of a computer-implemented method which performs tasks of message distribution automatically and, consequently, no human errors occur.

Hence, it is an object of the present invention to provide a computer-implemented method for operating a distribution server system which leads to less traffic over the network, less effort regarding workload and moreover, can be performed in a reliable fashion. Furthermore, it is an object of the present invention to provide a respective distribution server system being arranged to execute the suggested computer-implemented method. It is also an object of the present invention to provide a computer program product comprising instructions implementing the suggested method and being arranged to operate the suggested distribution server system.

The object is solved by subject matter of the independent claims. Further advantages and technical effects are provided by the dependent claims.

Accordingly, a computer-implemented method for operating a distribution server system is suggested comprising the steps of providing a list of network addresses, specifying a maximum number of information items to be sent per time unit to each of the provided network addresses, implementing a counter upon sending the information items to a specific network address, and iteratively sending different information items to said specific network address until the counter reaches the maximum number of information items.

The suggested method is computer-implemented but may require user input. However, it can be performed automatically and, consequently, the user input is optional. The distribution server system might be implemented such that a communication infrastructure is provided involving several servers and respective network components. Network components might involve additional units such as routers or a wireless telecommunication infrastructure. Consequently, the suggested method steps may be performed by one or more servers. Depending on the users' end devices, a respective network architecture is chosen. The suggested method may be implemented using a wired network such as the internet or a wireless network such as a mobile telecommunication network.

The suggested distribution server system aims at the distribution of information items providing information to human users. The human users might operate end devices such as mobile end devices or personal computers. According to a preferred aspect, the user operates a mobile phone and, consequently, receives the information items by either e-mail or SMS.

For providing information items, a list of network addresses is established in a preliminary method step. This may be performed such that a Mobile Network Operator provides the respective list or the users subscribe and, consequently, become part of the list of network addresses. An internet interface may be provided such that the users register and consequently provide their network addresses. In general, the users are typically known to the Mobile Network Operator and, consequently, it is an option that the Mobile Network Operator provides network addresses such as telephone numbers or e-mail addresses.

In a subsequent step, specifying a maximum number of information items is performed. The information items include e-mails or SMS and the suggested method is arranged to specify how many of these information items are sent to the end user per time unit. A time unit may, for instance, be one week and one single user may be configured to receive ten information items per week. The specification as such may be performed by manual input or a default value may be set. The maximum number of information items is defined for the entirety of network addresses. Hence, each of the network addresses receives a maximum of the specified number. It may also be of advantage to provide partitions of the list of network addresses and define for a first part of network addresses a specific maximum number and define for a second part of the list of network addresses a second maximum number. Hence, network addresses may receive a first specific amount of information items, for instance 10 information items, and a second part of network addresses might receive a second number of maximum information items, for instance 20 information items. In this way it is possible to identify which law is applicable and, consequently, implement the maximum number of information items. In a first country a first maximum number may be allowable and in a second country a second number of maximum information items may be allowable. Hence, each country can be addressed separately.

Upon sending an information item, a counter for this specific network address is incremented. Hence, the number of information items is counted and in this way it is made sure that the maximum number of information items is not exceeded. In case the information items are provided by means of e-mails, the number of e-mails for each specific network address is counted and, consequently, the number of sent e-mails is less than or equal to the maximum allowable number of information items. It may also be of advantage to provide different types of information items such that a first number of e-mails is sent and a second number of SMS is sent. Consequently, all information items of any type are summed up and the maximum number is not exceeded.

The information items are sent in case the maximum number is not exceeded and in case the counter reaches the maximum number of information items, no further information items are sent. The underlying time unit may be an absolute or a relative time unit. Hence, a moving time window or an absolute time window may be defined. A moving time window refers, for instance, to one week which constantly moves on, or the time unit may be absolute in case that a week starts in any case on Monday and ends on Sunday, wherein a number of information items not being sent within the absolute time window is discarded. The time unit as such may be specified in any possible way, for instance using minutes, hours, or days. The time unit may also be specified as a function of the underlying information item type meaning that e-mails may be sent according to a first maximum number within the time unit and SMS may be sent according to a second maximum number within each time unit.

According to an aspect of the present invention, a Mobile Network Operator provides the list of network addresses. This provides the advantage that the required lists are already present as any Mobile Network Operator has subscription lists and, consequently, holds the network addresses of the subscribers. Consequently, the list of network addresses can be provided automatically and no manual user subscription is required. The Mobile Network Operator merely provides an interface and the suggested method can access the list of network addresses.

According to a further aspect of the present invention, the distribution server system comprises a Mobile Network Operator server and a third-party server. This provides the advantage that the workload can be split up and the network addresses are provided by the Mobile Network Operator and further algorithms are implemented and operated by a third-party server. Hence, a distribution server system is established comprising several servers and a network infrastructure.

According to a further aspect of the present invention, providing the list of network addresses comprises a step of subscribing network addresses using an internet interface. This provides the advantage that alternatively or additionally the network addresses might be provided by the users themselves. The users might be provided with an interface, such as a web page, which allows them to provide their data and actively register for receiving information items. They can provide their network address and will receive the information items using this specific network address.

According to a further aspect of the present invention, the information items are provided by a third-party server. This provides the advantage that the content as such meaning the e-mails or the SMS can be designed, created, and distributed using a third-party server. Consequently, any content can be provided by a third-party server.

According to a further aspect of the present invention, sending different information items is performed using an internet connection and/or a mobile telecommunication infrastructure. This provides the advantage that commonly known distribution techniques can be used and especially, a combination of both techniques can be applied. In this way the user might receive information items using his or her personal computer and/or a mobile end device.

According to a further aspect of the present invention, the time unit is measured in hours, weeks, months, or years. This provides the advantage that any time unit can be used and according to the underlying law or available hardware capacities, a specific amount of time can be specified which is used by the suggested method.

According to a further aspect of the present invention, the information item comprises format data and content data. This provides the advantage that the information items can be displayed considering the users' end devices. For instance, in case the information items are sent via e-mail, a respective format can be provided involving pictures and text. In case SMS messages are sent, no specific format data is provided but only content data. Format data can, for instance, be provided using HTML code defining measurements and coordinates of pictures and providing information for text formatting.

According to a further aspect of the present invention, the information item is provided by means of an e-mail, a web page, a Short Message Service, a Multimedia Messaging Service, e.g. Whatsapp or any messaging service using an app e.g. Facebook, Instagram, etc., and/or an electronic message. This provides the advantage that any kind of electronic messages can be sent and the respective service can be chosen as a function of the provided network address. In case the network address is an e-mail address, an e-mail can be sent and in case a telephone number is provided, a Short Message Service can be used.

According to a further aspect of the present invention, sending different information items is performed using a hypertext protocol, e.g. hypertext send via SMS. This provides the advantage that commonly known techniques can be used and, consequently, no adaption is required regarding the users' end devices.

According to a further aspect of the present invention, updating the list of network addresses is performed as a function of received feedback information. This provides the advantage that in case one network address is not reached and a time-out message is received, the respective network address can be deleted from the list. In case the sent information item is incompatible, a different format can be used.

According to a further aspect of the present invention, the maximum number is set as a default value. This provides the advantage that no specific maximum number has to be used but rather one single default value is provided which can be used for all network addresses. The default value may, for instance, specify the number of allowed e-mails in one specific country. Consequently, such a default value is stored on the server and no further effort is required.

According to a further aspect of the present invention, the network address describes an e-mail address and internet protocol address, a port, a user account, a Mobile Station Integrated Services Digital Network Number, and/or a telephone number. This provides the advantage that the network address as such can be used for the identification of the required information item. For instance, in case the provided address is an e-mail address, HTML code may be provided or plain text. In case a telephone number is provided, a SMS is sent.

The object is also solved by a distribution server system, comprising a database interface arranged to provide a list of network addresses, a configuration interface arranged to specify a maximum number of information items to be sent per time unit to each of the provided network addresses, a processing unit arranged to increment a counter upon sending the information item to a specific network address, and a communication unit arranged to iteratively send different information items to said specific network address until the counter reaches the maximum number of information items.

The object is also solved by a computer program product being arranged to perform the suggested method and being arranged to operate the suggested server system.

According to the present invention, the method provides method steps which can likewise be performed using the suggested server system. The server system holds structural features which provide functions such as those provided by respective method steps. Consequently, the features of the method can likewise be implemented using functionality of the server system.

Further aspects of the present invention are provided in the context of the accompanying figures, which show:
- Fig. 1:: a sequence diagram illustrating an aspect of the prior art;
- Fig. 2:: a further sequence diagram demonstrating the communication flow according to the suggested method; and
- Fig. 3:: a schematic flowchart depicting the method for operating a distribution server system according to the present invention.

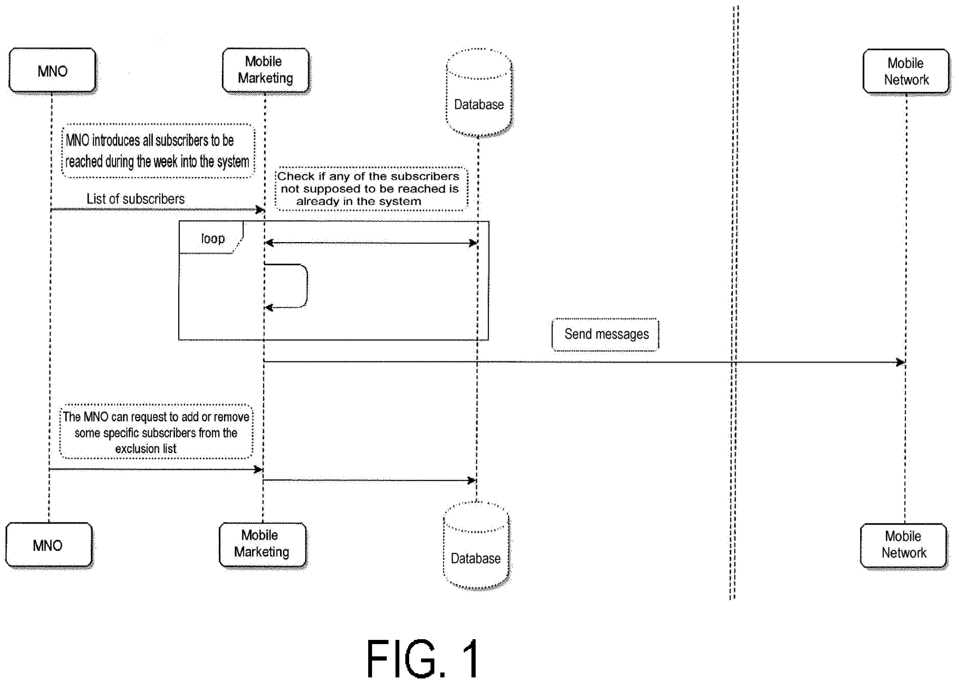

Fig. 1 shows a Mobile Network Operator MNO on the left side and a third-party server named "mobile marketing". The information items are provided using a mobile network shown on the right side. The Mobile Network Operator on the left side provides the list of network addresses and consequently, the third-party server can check if any of the addresses are already in the database and must not be reached. Consequently, information items are provided only to those addresses which are registered for receiving respective information.

The Mobile Network Operator can request adding or removing some specific subscribers from the exclusion list. The information items are sent from the mobile marketing server to the end devices using the mobile network.

A lot of time is spent creating the destination lists and human error can occur. Moreover, opt-outs lists cannot be used for this purpose as they are static and also managed manually by a customer-care person. Moreover, heavy network traffic results from too much information items being sent.

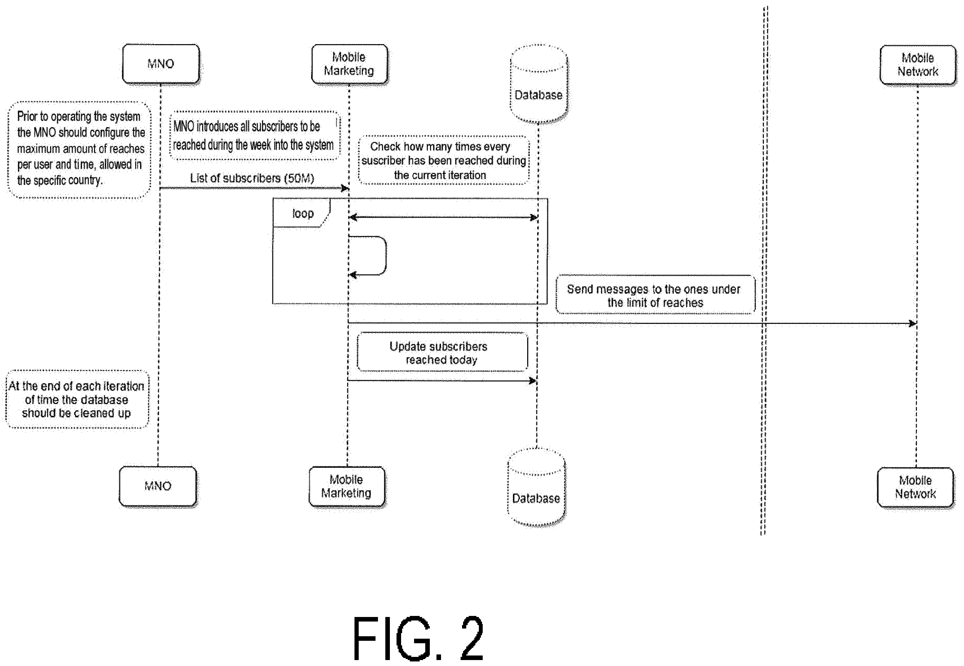

Fig. 2 shows the proposal of the present invention to make opt-outs lists dynamic and configurable. As an example, a maximum number of advertisements per unit of time, after someone reaches the limit, is specified. This person would be included in that list and should be available again after the end of the period of time. In this way spam can be avoided. Destination lists can be created once and the users will or will not receive the campaigns depending on the number of reached campaigns during a specific period of time. Therefore, time spend to check destination lists is avoided. Less risk of human error regarding the creation of those lists is implied, which means less risk of breaking anti-spam laws.

As can be seen in Fig. 2, prior to running the system the Mobile Network Operator configures the maximum amount of reaches per user end time allowed in the specific country. The third-party server named "mobile marketing" checks how many times information items were sent to every subscriber during the current iteration. In case the maximum amount is reached, no further messages are sent. Hence, messages are only sent to the ones under the limit of reaches.

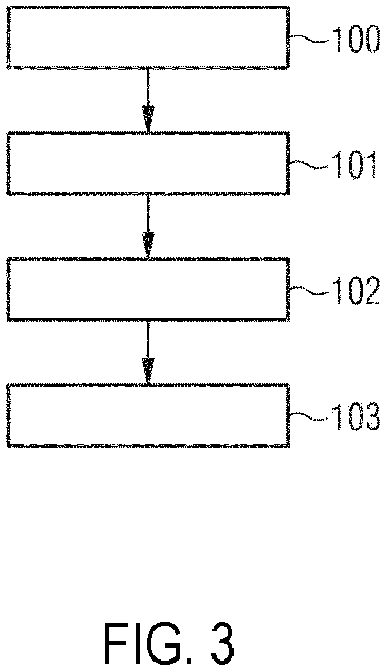

Fig. 3 shows a schematic flowchart diagram of a computer-implemented method for operating a distribution server system according to the present invention comprising the steps of providing 100 a list of network addresses, specifying 101 a maximum number of information items to be sent per time unit to each of the provided 100 network addresses, incrementing 102 a counter upon sending 103 the information item to a specific network address and iteratively sending 103 different information items to said specific network address until the counter reaches the maximum number of information items.

The person skilled in the art recognizes that the aforementioned method steps may be performed iteratively and may furthermore comprise substeps.

## Claims

1. A computer-implemented method for operating a distribution server system, comprising the steps:
- providing (100) a list of network addresses;
- specifying (101) a maximum number of information items to be sent per time unit to each of the provided (100) network addresses;
- incrementing (102) a counter upon sending (103) the information item to a specific network address; and
- iteratively sending (103) different information items to said specific network address until the counter reaches the maximum number of information items.

2. The method according to claim 1, **characterized in that** a mobile network operator (MNO) provides (100) the list of network addresses.

3. The method according to claim 1 or 2, **characterized in that** the distribution server system comprises a mobile network operator (MNO) server and a third-party server.

4. The method according to any one of the preceding claims, **characterized in that** providing (100) the list of network addresses comprises a step of subscribing network addresses using an internet interface.

5. The method according to any one of the preceding claims, **characterized in that** the information items are provided by a third-party server.

6. The method according to any one of the preceding claims, **characterized in that** sending (103) different information items is performed using an internet connection and/or a mobile telecommunication infrastructure.

7. The method according to any one of the preceding claims, **characterized in that** the time unit is measured in hours, weeks, months or years.

8. The method according to any one of the preceding claims, **characterized in that** the information item comprises format data and content data.

9. The method according to any one of the preceding claims, **characterized in that** the information item is provided by means of an e-mail, a web page, a Short Message Service, a Multimedia Messaging Service and/or an electronic message.

10. The method according to any one of the preceding claims, **characterized in that** sending (103) different information items is performed using a hypertext protocol.

11. The method according to any one of the preceding claims, **characterized in that** updating the list of network addresses is performed as a function of received feedback information.

12. The method according to any one of the preceding claims, **characterized in that** the maximum number is set as a default value.

13. The method according to any one of the preceding claims, **characterized in that** the network address describes an e-mail address, an internet protocol address, a port, a user account, a Mobile Station Integrated Services Digital Network Number and/or a telephone number.

14. A distribution server system, comprising:
- a database interface arranged to provide (100) a list of network addresses;
- a configuration interface arranged to specify (101) a maximum number of information items to be sent per time unit to each of the provided (100) network addresses;
- a processing unit arranged to increment (102) a counter upon sending (103) the information item to a specific network address; and
- a communication unit arranged to iteratively send (103) different information items to said specific network address until the counter reaches the maximum number of information items.

15. A computer program product being arranged to perform a method in accordance with any one of the preceding claims 1 to 13, when being executed on a computer.
